# EUROPÄISCHE PATENTSCHRIFT

(11) **EP 3 173 261 B1**
(45) Veröffentlichungstag und Bekanntmachung des Hinweises auf die Patenterteilung: **15.01.2020**
(21) Anmeldenummer: 16200218.2
(22) Anmeldetag: 23.11.2016
(51) Int. Cl.: B60C 27/06, B60C 27/10

(54) **GLEITSCHUTZVORRICHTUNG MIT EINEM INNERHALB EINES KETTENSTRANGS ÜBER DIE LAUFFLÄCHE GEFÜHRTEN ZUGMITTEL UND STARREM HALTEKÖRPER**
ANTI-SLIP DEVICE WITH ONE TRACTION MEMBER GUIDED OVER THE TREAD AREA WITHIN A CHAIN STRAND AND RIGID HOLDING BODY
DISPOSITIF ANTIDÉRAPANT COMPRENANT UN LIEN SOUPLE GUIDÉ À L'INTÉRIEUR D'UNE PARTIE DE CHAÎNE SUR LA BANDE DE ROULEMENT ET CORPS DE RETENUE FIXE

(30) Priorität: 25.11.2015 DE 102015223355
(43) Veröffentlichungstag der Anmeldung: 31.05.2017
(73) Patentinhaber: RUD Ketten Rieger & Dietz GmbH u. Co. KG, 73432 Aalen (DE)
(72) Erfinder: Rieger, Hansjörg, 73431 Aalen (DE); Grimm, Anton, 73479 Ellwangen (DE); Sieber, Frank, 73432 Aalen (DE); Schmidle, Reinhold, 73432 Aalen (DE); Kaiser, Helmut, 73492 Rainau (DE)
(74) Vertreter: Grünecker Patent- und Rechtsanwälte PartG mbB

(56) Entgegenhaltungen:
- EP-A1- 0 292 315
- EP-A1- 0 438 999
- WO-A2-99/47371

## Beschreibung

Die Erfindung betrifft eine Gleitschutzvorrichtung für den Reifen eines Kraftfahrzeugs, mit einer zusammenziehbar ausgestalteten Innenhalterung, die bei montierter Gleitschutzvorrichtung an der dem Kraftfahrzeug zugewandten Innenseite des Reifens angeordnet ist, mit einer Außenhalterung, die bei montierter Gleitschutzvorrichtung an der vom Kraftfahrzeug weg weisenden Außenflanke des Reifens angeordnet ist, mit einem Traktionsabschnitt, der an der Innen- und der Außenhalterung angebracht ist und bei montierter Gleitschutzvorrichtung auf der Lauffläche des Reifens anliegt, und mit einem Zugmittel zum Zusammenziehen der Innenhalterung, das sich bei montierter Gleitschutzvorrichtung von der Innenhalterung über die Lauffläche zur Außenhalterung erstreckt, wobei die Außenhalterung einen ring- oder scheibenförmigen Haltekörper aufweist, der wenigstens eine selbsttätige Spannvorrichtung für das Zugmittel trägt und wobei die Innenhalterung wenigstens eine Zugmittelführung aufweist, von der das Zugmittel umgelenkt ist.

Eine derartige Gleitschutzvorrichtung ist beispielsweise in Fig. 1 der EP 1 331 109 A2, von der als nächstkommender Stand der Technik ausgegangen ist, und in der EP 2 489 528 B1 gezeigt. Eine Gleitschutzvorrichtung mit einem Zugmittel zum Zusammenziehen der Innenhalterung ist zudem aus der EP 292 315 A1 bekannt.

Die DE 31 11 271 C2 zeigt eine weitere Variante, bei der die Innenhalterung auf der Außenseite des Reifens gespannt werden kann. Die DE 38 25 745 A1 und die DE 28 25 748 A1 zeigen Gleitschutzvorrichtungen mit einem Gleitschutzgürtel, der mit einer eigenen Spannvorrichtung straff über die Lauffläche gespannt werden kann. Die EP 0 438 999 A1 zeigt eine Schneekette für Reifen mit einer Kette als Innenhalterung und einer über Hebel und Federn spannbaren Spannkette, wobei die Spannkette mit der Innenhalterung über Ösen gleitend verbunden ist.

Das Zusammenziehen der Innenhalterung nach der Montage der Gleitschutzvorrichtung auf dem Reifen, um dadurch die Gleitschutzvorrichtung am Reifen zu befestigen, ist bei den beiden vorgenannten Gleitschutzvorrichtungen nur unbefriedigend gelöst.

Die vorliegende Erfindung setzt sich daher zum Ziel, eine Gleitschutzvorrichtung der eingangs genannten Art so zu verbessern, dass die Innenhalterung von einem Nutzer jederzeit zuverlässig und sicher am Reifen befestigt werden kann.

Diese Aufgabe wird für die eingangs genannte Gleitschutzvorrichtung erfindungsgemäß dadurch gelöst, dass die Zugmittelführung an mindestens einem Ende eines zusammenziehbaren Bügels der Innenhalterung angeordnet ist..

Diese Ausgestaltung hat den Vorteil, dass der Haltekörper die von der Spannvorrichtung zum Spannen des Zugmittels erzeugten Kräfte verformungsfrei aufnimmt. Im Gegensatz dazu sind die Außenhalterungen der EP 1 331 109 A2 und der EP 2 489 528 B1 biegeschlaff, was deren Betätigung erheblich erschwert.

Die erfindungsgemäße Lösung kann durch die folgenden, jeweils für sich vorteilhaften und beliebig miteinander kombinierbaren Merkmale weiterentwickelt werden.

So kann in einer ersten vorteilhaften Ausgestaltung der ring- oder scheibenförmige Haltekörper sich von der Reifenflanke radial einwärts bis jenseits der Felgenschulter erstrecken. Auf diese Weise dient der Haltekörper gleichzeitig als Felgenschutz, der die Felge vor einer Berührung mit dem Traktionsabschnitt oder dem Zugmittel schützt. Der Haltekörper ist bevorzugt als Ringscheibe ausgestaltet, um in seinem Inneren Zugang zur Felge und den Radmuttern zu gewährleisten. Der Haltekörper ist bevorzugt aus einem Kunststoffmaterial gefertigt. Für die im Betrieb der Gleitschutzvorrichtung auftretenden Kräfte einschließlich eventueller Sicherheitsanschläge ist er als Starrkörper anzusehen. Bei dem Zugmittel kann es sich um ein Seil, insbesondere ein Drahtseil, oder mehrere Seile handeln.

Am Haltekörper, insbesondere an dessen Außenumfang, kann der Traktionsabschnitt mittelbar über Befestigungsmittel wie Haken oder Ringe, oder auch unmittelbar befestigt sein, wobei eine Beweglichkeit des Traktionsabschnittes in Umfangsrichtung des Reifens bzw. der Gleitschutzvorrichtung relativ zum Haltekörper anzustreben ist, um die Walkbewegungen des Reifens besser ausgleichen zu können. Die Befestigungsmittel können in etwa im gleichen Abstand über den Umfang des Haltemittels verteilt angeordnet sein.

An der Innenhalterung können die Befestigungselemente gleichermaßen in Umfangsrichtung verschieblich oder auch unverschieblich angebracht sein.

Der Traktionsabschnitt ist bevorzugt aus einzelnen Segmenten aufgebaut, die bevorzugt ausschließlich an der Innen- und der Außenhalterung miteinander verbunden sind, beispielsweise über die Befestigungsmittel. Im Bereich der Lauffläche sind die einzelnen Segmente nicht miteinander verbunden. Jeweils zwei Segmente können durch eine rautenförmige Masche voneinander getrennt sein, wobei sich die rautenförmige Masche quer zur Umfangsrichtung bevorzugt von der Innenhalterung zur Außenhalterung bzw. von einem an der Innenhalterung bevorzugt unmittelbar angebrachten Befestigungsmittel zu einem an der Außenhalterung bevorzugt unmittelbar angeordneten Befestigungsmittel erstrecken kann.

Das Zugmittel kann an einer Stelle oder an zwei in Umfangsrichtung voneinander beabstandeten Stellen über die Lauffläche bzw. von der Innen- zur Außenhalterung verlaufen. Wenigstens ein Ende des Zugmittels ist an der Spannvorrichtung befestigt und kann von dieser gespannt werden.

Das Zugmittel selbst kann ein durchgängiges Seil sein oder zwei oder mehr Seile umfassen. Vorzugsweise sind die als Zugmittel verwendeten Seile sehr lehnig, damit sie sich leicht umlenken lassen.

Die Spannvorrichtung kann einen Federantrieb aufweisen, der eine Zugkraft zum Zusammenziehen der Innenhalterung aufweist. Die Spannvorrichtung kann insbesondere ein Ratschenmechanismus sein, bei dem das Zugmittel oder ein zwischengeschaltetes Spannmittel, beispielsweise ein weiteres Drahtseil, auf einer Trommel aufgewickelt wird, die von einer Feder angetrieben wird und durch eine Sperrklinke gegen ein Abrollen gesichert sein kann. Ein derartiger Ratschenmechanismus ist beispielsweise in der EP 1 301 361 B1 beschrieben. Wird ein separates Spannmittel verwendet, kann daran das Zugmittel befestigt sein.

Die Innenhalterung erstreckt sich bei montierter Gleitschutzvorrichtung bevorzugt koaxial zum Reifen. Als zusammenziehbare Innenhalterung eignet sich besonders ein elastischer Bügel, beispielsweise ein elastischer Bügel aus einem steifen Draht oder Drahtseil, oder ein elastischer Bügel aus einem Kunststoff oder einem Metall wie Federstahl. Die Enden des Bügels sind durch das Zugmittel bevorzugt direkt miteinander verbunden. Von wenigstens einem der Enden kann sich das Zugmittel weiter zur Außenhalterung erstrecken.

Durch Zug auf das Zugmittel, insbesondere auf den Abschnitt des Zugmittels, der sich an der Außenhalterung befindet, werden die Enden des Bügels aufeinander zu bewegt. Hierzu kann an wenigstens einem Ende des Bügels das Zugmittel relativ in Längsrichtung des Zugmittels beweglich zu diesem Ende geführt, aber in Richtung des anderen Endes des Bügels unbeweglich an dem einen Ende fixiert sein.

Ein schnelleres Einholen des Zugmittels lässt sich durch ein Paar von Spannvorrichtungen erreichen, wobei von jeder Spannvorrichtung ein Abschnitt, bevorzugt ein Ende, des Zugmittels gespannt bzw. eingeholt werden kann. Die Spannvorrichtungen sind bevorzugt in Umfangsrichtung gegenläufig orientiert; die von ihnen erzeugten Zugkräfte sind einander in Umfangsrichtung entgegen gerichtet.

Bei der Verwendung von zwei Spannvorrichtungen können diese in Umfangsrichtung voneinander beabstandet sein, so dass eine möglichst geringe Unwucht bei der Drehung der Gleitschutzvorrichtung im Betrieb des Kraftfahrzeugs auftritt. Bezüglich einer Achse des Reifens können die zwei Spannvorrichtungen um 180° oder 120° oder einem Winkel in diesem Bereich versetzt zueinander liegen.

Werden zwei oder mehr Spannvorrichtungen verwendet, so befinden sich Abschnitte des Zugmittels, die an den Spannvorrichtungen geführt sind, bevorzugt an in Umfangsrichtung voneinander beabstandeten Stellen des Traktionsabschnittes bzw. der Lauffläche. Die Abschnitte des Zugmittels können sich insbesondere im Bereich der Außenhalterung, bevorzugt am Haltekörper, überkreuzen. Dies ermöglicht behutsamere Umlenkungen des Zugmittels, was Reibungsverluste verringert.

Die beiden Abschnitte des Zugmittels sind bevorzugt so mit den Enden des Bügels verbunden, dass der Bügel durch das Einziehen des Zugmittels zusammengezogen und somit die Innenhalterung an der Innenseite des Reifens gesichert wird.

Werden zwei Spannvorrichtungen verwendet, ist bevorzugt jede der Spannvorrichtung einem anderen Ende des Bügels zugeordnet. Insbesondere kann jede der beiden Spannvorrichtungen über das Zugmittel mit einem anderen Ende des Bügels der Innenhalterung nächstliegend verbunden sein.

Um auch bei begrenztem Hub der Spannvorrichtung oder bei begrenzter Spannkraft der Spannvorrichtung die Innenhalterung ausreichend zusammenziehen zu können, kann die wenigstens eine Spannvorrichtung einen Flaschenzug aufweisen. Je nach Ausgestaltung des Flaschenzugs kann dieser dazu verwendet werden, den von der Spannvorrichtung erzeugten Hub oder die von der Spannvorrichtung erzeugte Spannkraft zu vergrößern. Es bietet sich an, die starre Struktur des Haltekörpers zu nutzen und den Flaschenzug am Haltekörper anzubringen bzw. zu verankern.

Insbesondere wenn eine kompakte Spannvorrichtung verwendet wird, ist der maximal erzeugbare Hub unter Umständen nicht ausreichend, um die Innenhalterung über das Zugmittel in einem ausreichenden Maße zusammenzuziehen. In einem solchen Fall kann das Zugmittel um eine Flaschenzugrolle des Flaschenzugs geführt sein, wobei die Flaschenzugrolle bzw. deren Achse mit dem Spannmittel der Spannvorrichtung verbunden sein kann und über das Spannmittel in Richtung zur Spannvorrichtung zum Zusammenziehen der Innenhalterung eingeholt werden kann. Zur Erhöhung der Kraft auf das Zugmittel können das Zugmittel an der Achse der Flaschenzugrolle und das Spannmittel um die Flaschenzugrolle geschlungen sein.

Zur Führung der Flaschenzugrolle bietet der ring- oder scheibenförmige Haltekörper einen besonderen Vorteil, weil er auf einfache Weise eine mechanische Zwangsführung für die Rolle ausbilden kann. Insbesondere kann die Rolle entlang der Außenhalterung verschieblich geführt sein. Der Weg der Rolle kann, insbesondere bei einem ringscheibenförmigen Haltekörper, einen Kreisbogen beschreiben. Die mechanische Führung kann in Form wenigstens einer Führungswand ausgebildet sein. Die Führungswand kann integraler Bestandteil des Haltekörpers sein.

Die Flaschenzugrolle kann auf einem Schlitten befestigt sein, der in einer mechanischen Führung des Haltekörpers geführt ist.

Um den Schlitten mit möglichst geringen Reibungsverlusten auch in stark verschmutzter Umgebung bewegen zu können, kann der Schlitten eine oder mehrere Führungsrollen aufweisen, an denen er insbesondere an der wenigstens einen Führungswand abrollt.

Bei der Verwendung eines Flaschenzuges kann das Zugmittel auch ein endloses Seil sein, das, ohne an der Außenhalterung befestigt zu sein, durch wenigstens eine von einer Spannvorrichtung eingeholten Flaschenzugrolle gespannt wird.

Das Zugmittel kann an einem oder an beiden Enden an der Außenhalterung befestigt sein. Die Befestigungsstellen können insbesondere unbeweglich sein, also beispielsweise am Haltekörper befestigt sein.

Dort, wo das Zugmittel auf die Außenhalterung trifft und umgelenkt wird, kann wenigstens eine Umlenkrolle vorhanden sein, um auch an dieser Stelle möglichst wenig Reibungsverluste zu schaffen.

Die Zugmittelführung lenkt das Zugmittel vorzugsweise in einem stumpfen Winkel zur Außenhalterung bzw. Lauffläche hin um. Die Zugmittelführung der Innenhalterung kann eine rohr- oder rinnenförmige Führung für das Zugmittel aufweisen. Eine solche Zugmittelführung kann durch zwei aneinander befestigte Blechschalen oder einem monolithischen Gußteil hergestellt sein. Alternativ kann die Zugmittelführung auch von einem Kunststoffteil gebildet sein. Jedem Abschnitt des Zugmittels, der zur Außenhalterung geführt ist, kann eine separate Zugmittelführung zugeordnet sein.

Durch die Zugmittelführung der Innenhalterung ist das Zugmittel bevorzugt um einen stumpfen Winkel umgelenkt, damit durch die Umlenkung selbst nicht zu hohe Reibungskräfte erzeugt werden. In der Zugmittelführung kann das Zugmittel in einer reibungsmindernden Hülle, beispielsweise eine Hülse oder einem Schlauch, aufgenommen sein.

Bevorzugt ist die Zugmittelführung an einem Ende der Innenhalterung angeordnet, insbesondere, wenn es sich bei der Innenhalterung um einen Bügel handelt. Werden zwei Spannvorrichtungen an der Außenhalterung verwendet, kann sich an jedem Ende des Bügels eine Spannmittelführung befinden.

Zum Schutz des Zugmittels kann dieses im Bereich zwischen der Innen- und der Außenhalterung zumindest abschnittsweise innerhalb eines Kettenstranges verlaufen. Der Kettenstrang erstreckt sich bevorzugt von der Innen- zur Außenhalterung. Dabei kann das Zugmittel zwischen einer Mehrzahl von zueinander parallel verlaufenden Kettengliedern des Kettenstranges angeordnet sein. Der Kettenstrang, durch den das Zugmittel verläuft, schützt das Zugmittel vor Beschädigung im Betrieb der Gleitschutzvorrichtung. Gleichzeitig ist der Kettenstrang Teil des Traktionsabschnittes, da er im Betrieb die Traktion des Reifens auf rutschigem Untergrund erhöht.

Der Kettenstrang, durch den das Zugmittel verläuft, kann zwei parallel zueinander verlaufende Teilstränge aufweisen, wobei die Teilstränge durch zusätzliche, quer zu den Teilsträngen verlaufende Querglieder miteinander verbunden sein können. Das Spannmittel verläuft bevorzugt durch die Querglieder hindurch. Die Teilstränge sind bevorzugt aus Rund- oder Profilstahlketten aufgebaut.

Alternativ kann der Kettenstrang auch speziell gefertigte Kettenglieder aufweisen, die eine Durchführung für das Zugmittel aufweisen. So können plattenförmige Kettenglieder aus Metall oder Kunststoff verwendet werden, die einen rohrförmigen Durchlass aufweisen, durch den das Zugmittel verläuft.

Im Bereich des Kettenstranges kann das Zugmittel durch eine oder mehrere Hülsen hindurch geführt sein, die eine zu den Teilsträngen komplementäre Außenkontur aufweisen und einen Formschluss mit dem Kettenstrang bilden können.

Die Teilstränge können so ausgerichtet sein, dass die einander gegenüberliegenden Kettenglieder jeweils parallel ausgerichtet sind. Damit die Hülsen nicht verrutschen, kann zwischen den hochkant stehenden Kettengliedern der beiden parallelen Teilstränge, zwischen denen ein größerer Zwischenraum vorhanden ist, die Hülse verdickt sein. Zwischen den liegenden Kettengliedern kann ein schmalerer Abschnitt der Hülse vorhanden sein. Auf diese Weise sind die Hülsen gegen Verrutschen gesichert. Die die Teilstränge verbindenden Querglieder können in den liegenden Kettengliedern eingehängt sein oder die Kettenglieder der Teilstränge vollständig umgreifen.

Anstatt durch einen Kettenstrang kann das Spannmittel auch durch einen ein- oder mehrteiligen Kunststoffkanal geführt sein.

Der Kettenstrang kann sich bei montierter Gleitschutzvorrichtung wenigstens abschnittsweise schräg zur Umfangsrichtung von der Innen- zur Außenhalterung erstrecken. Der Kettenstrang kann in einem Bogen oder V-förmig über die Lauffläche geführt sein.

Der Kettenstrang kann Teil eines bei montierter Gleitschutzvorrichtung auf der Lauffläche aufliegenden Spurkreuzes des Traktionsabschnittes sein. Bei einem Spurkreuz laufen wenigstens drei Kettenstränge zusammen oder ist ein Kettenstrang an einem weiteren Kettenstrang eingehängt. Bevorzugt ist mit dem das Zugmittel aufnehmenden Kettenstrang wenigstens ein in Umfangsrichtung verlaufender Spurstrang verbunden. Der Spurstrang sichert das Zugmittel gegen Verrutschen, indem er den das Zugmittel aufnehmenden Kettenstrang in zumindest einer Richtung entlang der Umfangsrichtung fixiert.

Gemäß einer weiteren Ausgestaltung kann das Zugmittel mit wenigstens einem Spurstrang verbunden sein. Dabei kann das Zugmittel durch einen zumindest zugfest mit dem Spurstrang verbundenen Durchlass geführt sein. Der Durchlass erlaubt bevorzugt eine Bewegung des Zugmittels ausschließlich in dessen Längsrichtung relativ zum Spurstrang.

Vom Spurstrang weg verläuft das Zugmittel zu beiden Seiten bevorzugt in Richtung weg vom Spurstrang. Die Stelle, an der das Zugmittel mit dem Spurstrang verbunden ist, kann gegenüber den Stellen, an denen das Zugmittel auf die Außenhalterung und die Innenhalterung auftrifft, in Umfangsrichtung zum Spannstrang hin versetzt sein. Dadurch wird beim Spannen des Zugmittels nicht nur eine die Innenhalterung zusammenziehende und sichernde Zugkraft erzeugt, sondern auch eine in Umfangsrichtung auf den Traktionsabschnitt wirkende Kraft, die den Traktionsabschnitt über der Lauffläche zusammenzieht. Dieser Effekt kann dadurch verstärkt werden, dass das Zugmittel, wie oben bereits erwähnt, an zwei in Umfangsrichtung voneinander beabstandeten Stellen über das Laufnetz geführt wird und dort an sich gegenüberliegenden Stellen den Traktionsabschnitt über die Lauffläche des Reifens spannt.

So können zwei Abschnitte mit den sich gegenüberliegenden Enden zweier in Umfangsrichtung aufeinander folgender Spurstränge verbunden sein. Ein Spannen eines in Umfangsrichtung im Bereich der Lauffläche segmentierten Traktionsabschnittes kann über die in Umfangsrichtung verschieblichen Befestigungsmittel am Haltekörper erfolgen, über die die einzelnen Segmente des Traktionsabschnittes miteinander verbunden sind. Die vom Zugmittel auf den wenigstens einen Spurstrang ausgeübte Spannkraft wird über die Befestigungsmittel in Umfangsrichtung von Segment zu Segment weitergegeben. Ist das Zugmittel nur an einer einzigen Stelle mit dem Traktionsabschnitt verbunden, so ist wenigstens eines der in Richtung der Spannkraft in Umfangsrichtung auf diese Stelle folgenden Befestigungsmittel in Umfangsrichtung unverschieblich. Dieses Befestigungsmittel fixiert so das dem Angriffspunkt der Spannkraft entgegengesetzte Ende des Traktionsabschnittes und erlaubt das Straffziehen des Traktionsabschnittes mit Hilfe der Spannkraft.

Das Zugmittel muss nicht notwendigerweise an einem Spurstrang eingehängt sein. Es kann alternativ auch an einem quer zur Umfangsrichtung verlaufenden Traktionsstrang des Traktionsabschnittes eingehängt sein. In einem solchen Fall erstreckt sich der Traktionsstrang bevorzugt von der Innen- zur Außenhalterung bzw. von einem Befestigungsmittel an der Innenhalterung zu einem Befestigungsmittel an der Außenhalterung. Ist wenigstens eines dieser Befestigungsmittel in Umfangsrichtung beweglich, so kann auch bei dieser Anordnung die vom Zugmittel auf den Traktionsabschnitt ausgeübte Spannkraft den Traktionsabschnitt straffziehen.

Bei einer bügelförmigen Innenhalterung verläuft das Zugmittel bevorzugt direkt zwischen den beiden Enden des Bügels und von dort nach einer Umlenkung jeweils über die Lauffläche. Dadurch wirkt die von der wenigstens einen Spannvorrichtung erzeugte Kraft unmittelbar zwischen den beiden Enden. Eine Führung des Zugmittels entlang der Innenhalterung, wie sie beispielsweise in der EP 2 489 528 B1 gezeigt ist, würde dagegen zu viel Reibungsverluste verursachen.

Im Folgenden ist die Erfindung anhand der Figuren beispielhaft näher erläutert. In den Figuren dargestellte unterschiedliche Merkmalskombinationen können nach Maßgabe der obigen Ausführungen variiert werden. So kann beispielsweise auf ein Merkmal verzichtet werden, obwohl es in den Figuren dargestellt ist, wenn bei einer bestimmten Anwendung der mit diesem Merkmal verbundene Vorteil nicht maßgeblich ist. Gleichermaßen kann einer dargestellten Merkmalskombination ein weiteres Merkmal hinzugefügt werden, wenn es für eine Anwendung auf dessen technischen Effekt ankommt.

Der Einfachheit halber werden in den Figuren für Elemente, die einander hinsichtlich Funktion und/oder Aufbau entsprechen, dieselben Bezugszeichen verwendet. Bei unterschiedlichen Ausgestaltungen wird lediglich auf Unterschiede zu den vorangegangenen Ausführungen eingegangen.

Es zeigen:
- Fig. 1: eine schematische Darstellung einer Innenhalterung einer erfindungsgemäßen Gleitschutzvorrichtung im montierten Zustand;
- Fig. 2: eine schematische Darstellung einer Zugmittelführung der Innenhalterung;
- Fig. 3: eine schematische Darstellung einer Außenhalterung einer erfindungsgemäßen Gleitschutzvorrichtung;
- Fig. 4: eine schematische Darstellung eines Kettenstrangs für ein Zugmittel der erfindungsgemäßen Gleitschutzvorrichtung;
- Fig. 5: eine schematische Schnittdarstellung entlang der Linie V-V der Fig. 4;
- Fig. 6: eine schematische Darstellung eines weiteren Kettenstranges für das Zugmittel;
- Fig. 7: eine schematische Darstellung eines weiteren Kettenstranges für das Zugmittel;
- Fig. 8: eine schematische Darstellung eines weiteren Kettenstranges für das Zugmittel;
- Fig. 9: eine schematische Darstellung einer weiteren Führung für das Zugmittel;
- Fig. 10: eine schematische Darstellung einer weiteren Innenhalterung einer erfindungsgemäßen Gleitschutzvorrichtung;
- Fig. 11: eine schematische Darstellung einer weiteren Innenhalterung einer erfindungsgemäßen Gleitschutzvorrichtung;
- Fig. 12: eine schematische Darstellung einer weiteren Außenhalterung einer erfindungsgemäßen Gleitschutzvorrichtung;
- Fig. 13: eine schematische Darstellung einer weiteren Außenhalterung einer erfindungsgemäßen Gleitschutzvorrichtung;
- Fig. 14: eine schematische Darstellung eines Traktionsabschnittes mit Kettensträngen für das Zugmittel;
- Fig. 15: eine schematische Darstellung eines weiteren Traktionsabschnittes mit Kettensträngen für das Zugmittel;
- Fig. 16: eine schematische Darstellung einer weiteren Außenhalterung einer erfindungsgemäßen Gleitschutzvorrichtung;
- Fig. 17: eine schematische Darstellung einer weiteren Außenhalterung einer erfindungsgemäßen Gleitschutzvorrichtung;
- Fig. 18: eine schematische Darstellung einer weiteren Außenhalterung einer erfindungsgemäßen Gleitschutzvorrichtung.

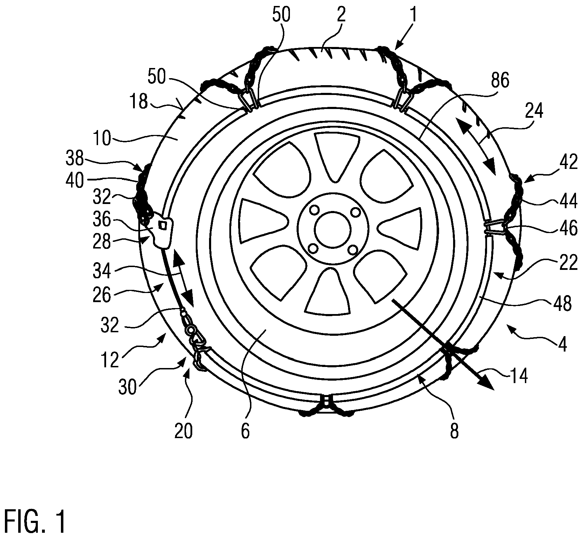

Fig. 1 zeigt eine erfindungsgemäße Gleitschutzvorrichtung 1 im montierten Zustand auf einem Fahrzeugreifen 2, der Teil eines Fahrzeugrades 4 ist, das zusätzlich eine Felge 6 aufweist.

Die Gleitschutzvorrichtung 1 weist eine Innenhalterung 8 auf, die bevorzugt an einer Reifenflanke 10 des Reifens 2 aufliegt und im Wesentlichen koaxial zum Reifen 2 verläuft. Die Innenhalterung 8 liegt dabei auf der dem Fahrzeug (nicht gezeigt) zugewandten Innenseite 12 auf. Um die Felge 6 nicht zu beschädigen, liegt die Innenhalterung 8 in radialer Richtung 14 von der Felge 6 beabstandet bevorzugt vollständig auf der Reifenflanke 10.

Die Innenhalterung 8 dient dazu, die Gleitschutzvorrichtung 1 auf dem Reifen zu sichern, indem sie verhindert, dass die Gleitschutzvorrichtung 1 zur Außenseite (in Fig. 1 nicht dargestellt) des Reifens 2 hin abgezogen werden kann.

Die Innenhalterung 8 ist von einem geweiteten Zustand, in dem sie zur Montage der Gleitschutzvorrichtung über den Reifen 2, insbesondere dessen Lauffläche 18, stülpbar ist, in einen zusammengezogenen Zustand 20 überführbar, in dem sie nicht mehr über die Lauffläche 18 abgezogen werden kann.

Die Zusammenziehbarkeit der Innenhalterung 8 lässt sich am einfachsten dadurch erreichen, dass die Innenhalterung 8 einen bevorzugt elastischen Bügel 22 aufweist, der in etwa entlang der Umfangsrichtung 24 des Reifens 2 bzw. der Gleitschutzvorrichtung 1 verläuft. Der Bügel 22 kann aus einem Drahtmaterial, beispielsweise Stahldraht, und/oder einem Kunststoff gefertigt sein.

An einer Stelle 26 ist der Bügel 22 unterbrochen, so dass sich zwei Enden 28, 30 bilden, die sich bezüglich der unterbrochenen Stelle 26 gegenüberliegen. Durch Vergrößern und Verkleinern der unterbrochenen Stelle 26 bzw. durch Voneinanderweg- und Aufeinanderzu-Bewegen der Enden 28, 30 wird die Innenhalterung 8 geweitet oder zusammengezogen.

Die beiden Enden 28, 30 sind durch ein Zugmittel 32 miteinander verbunden. Das Zugmittel 32 erstreckt sich über wenigstens eines der beiden Enden 28,30 hinaus über die Lauffläche 18.

Das Zugmittel 32 ist zum Zusammenziehen der Innenhalterung 8 an den beiden Enden 28, 30 so gehalten und geführt, dass sich durch Einholen, wie durch den Pfeil 34 angedeutet, des Zugmittels 32 an wenigstens einem der beiden Enden 28, 30 die beiden sich gegenüberliegenden Enden 28, 30 aufeinander zu bewegt werden.

Das Zugmittel 32 kann an dem einen Ende 30 befestigt und an dem anderen Ende 28 durch eine Zugmittelführung 36 umgelenkt sein. In der Zugmittelführung 36 ist das Zugmittel 32 so geführt, dass es sich am Ende 28 vorbeiziehen lässt, in Umfangsrichtung 24 jedoch fixiert ist.

Das Zugmittel 32 kann ein Drahtseil, vorzugsweise ein lehniges Drahtseil insbesondere mit einer glatten Oberfläche sein, das ohne große Reibungsverluste umlenkbar ist und gut gleitfähig ist.

Das Zugmittel 32 ist an wenigstens einer Stelle 38 über die Lauffläche 18 des Reifens geführt. Um das Zugmittel 32 auf der Lauffläche 18 vor Beschädigung zu schützen, kann es insbesondere in einem Kettenstrang 40 geschützt über die Lauffläche 18 geführt sein.

In Fig. 1 ist ferner zu erkennen, dass die Gleitschutzvorrichtung 1 einen Traktionsabschnitt 42 aufweist, der dazu dient, die Traktion des Reifens 2 auf rutschigem Untergrund, wie Schnee und/oder Eis, zu erhöhen. Der Traktionsabschnitt 42 kann aus Rund- oder Profilstahlketten gebildete Traktionsstränge 44 aufweisen, die quer und/oder schräg zur Umfangsrichtung 24 über die Lauffläche 18 reichen und ein Kettennetz bilden können.

Der Traktionsabschnitt 42 ist über Befestigungsmittel 46, beispielsweise Haken, Ringe, Karabiner oder Kettenglieder, mit der Innenhalterung 8 verbunden. Dabei ist der Traktionsabschnitt 42 relativ zur Innenhalterung 8 in Umfangsrichtung 24 fixiert. Eine solche Fixierung kann beispielsweise durch hülsen- oder schlauchförmige Abstandshalter 48 erfolgen, die auf das den Bügel 22 bildende Drahtseil geschoben und in Umfangsrichtung 24 unverschieblich hintereinander angeordnet sind. Die Befestigungsmittel 46 sind zwischen den Abstandshaltern 48 in Umfangsrichtung 24 fixiert, indem sie zwischen den Enden 50 der Abstandshalter 48 in Umfangsrichtung 24 fixiert sind.

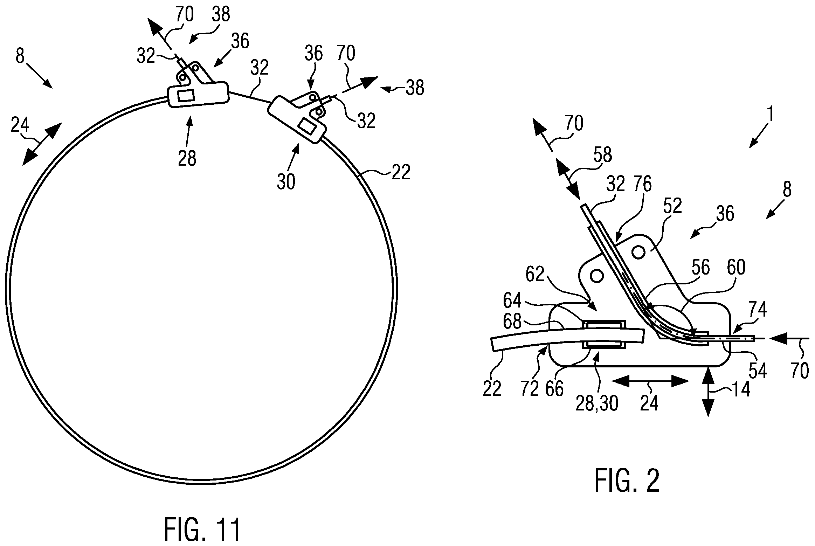

Fig. 2 zeigt eine Zugmittelführung 36, wie sie an einem oder beiden Enden 28, 30 eines Bügels 22 angebracht sein kann. In Fig. 2 ist die innere Struktur der Zugmittelführung 36 gezeigt. Die Zugmittelführung 36 kann ein monolithisches Bauteil aus Kunststoff oder Feinguss und/oder ein Stanzbiegeteil aus Blech sein. Sie kann auch aus zwei Halbschalen 52 zusammengesetzt sein.

Die Zugmittelführung 36 weist eine rinnen- oder rohrförmige Führung 54 für das Zugmittel 32 auf. In der Führung 54 kann das Zugmittel 32 von einer Hülse oder einem Schlauch 56 umgeben sein, um Reibungsverluste zu verringern. Entlang der Längsrichtung 58 des Zugmittels 32 ist das Zugmittel 32 in der Führung 54 bzw. der Zugmittelführung 36 verschieblich.

Die Zugmittelführung 36 bewirkt eine Umlenkung des Zugmittels 32 um einen bevorzugt stumpfen Winkel 60. Dabei wird das Zugmittel von der Umfangsrichtung 24 in eine Richtung umgelenkt, die schräg zur Umfangsrichtung 24 und zur radialen Richtung 14 geneigt ist und von der Bügelöffnung weg weist. Die Umlenkung um den Winkel 60 erfolgt in einem ausreichend großen Radius, der mehr als das Zehnfache des Durchmessers des Zugmittels 32 betragen kann.

Die Zugmittelführung 36 weist ferner einen Halteabschnitt 62 auf, in dem der Bügel 22, insbesondere dessen eines Ende 28, 30 fixiert ist. Beispielsweise kann die Zugmittelführung 36 eine Aufnahme 64 für eine auf dem Bügel 22 aufgebrachte Presshülse 66 aufweisen. An die Aufnahme 64 kann sich eine rohrförmige Aufnahme 68 mit kleinerem Durchmesser ein- oder beidseitig anschließen, in der der Bügel 22 aufgenommen ist. Damit eine auf das Zugmittel 32 jenseits der Innenhalterung 8 bzw. der Stelle 26 ausgeübte Zugkraft 70 in radialer Richtung 14 auf der Höhe des Bügels 22 wirkt, befinden sich die in Umfangsrichtung 24 weisende Öffnung 72 der Aufnahme 68 und die ebenfalls in Umfangsrichtung 24 weisende Öffnung 74 der Führung 54 in radialer Richtung 14 bevorzugt auf gleicher Höhe. Die andere Öffnung 76 der Führung 54 weist bei montierter Gleitschutzvorrichtung 1 zur Lauffläche 18 des Reifens 2 (vgl. Fig. 1) bzw. zum gegenüberliegenden Ende 28, 30 des Bügels 22. Am Austritt 76 aus der Zugmittelführung 36 verläuft die Längsrichtung 58 des Zugmittels 32 geneigt zur radialen Richtung 14.

Anstelle der Umlenkung in einer rohrförmigen Führung 54 kann selbstverständlich an den Enden 28, 30 auch eine konstruktiv allerdings aufwändigere Umlenkung über eine Rolle (nicht gezeigt) erfolgen.

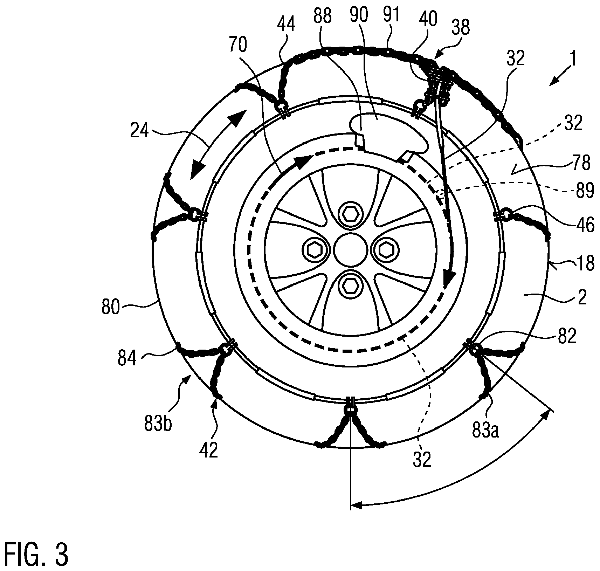

Fig. 3 zeigt eine Ansicht der auf dem Reifen 2 montierten Gleitschutzvorrichtung 1 mit Blick auf eine Außenseite 78 des Reifens 2. Die Außenseite 78 des Reifens weist bei einem Fahrzeug nach außen.

An der Außenseite 78 des Reifens 2 bzw. Rades 4 befindet sich eine Außenhalterung 80 der Gleitschutzvorrichtung 1, die das Abfallen der Gleitschutzvorrichtung 1 zur Innenseite 12 (Fig. 1) des Reifens hin verhindert. Die Außenhalterung 80 selbst muss nicht zusammenziehbar oder weitbar sein, da sie nicht über die Lauffläche gezogen werden muss.

An der Außenhalterung 80, bevorzugt dessen Außenumfang, ist der Traktionsabschnitt 42 wieder über Befestigungsmittel 46, beispielsweise Haken oder Ringe, befestigt. Die Befestigungsstellen 82, an denen die Außenhalterung 80 und der Traktionsabschnitt 42 miteinander verbunden sind, sind in Umfangsrichtung 24 etwa gleich beabstandet. In Umfangsrichtung 24 sind die Befestigungsmittel 46 bevorzugt beweglich gehalten, so dass sich der Traktionsabschnitt 42 leichter montieren lässt und der Walkbewegung des Reifens 2 beim Rollen besser folgen kann.

Alternativ oder zusätzlich können die Befestigungsmittel 46 auch in Umfangsrichtung 24 verschieblich an der Innenhalterung 8 angebracht sein. Der Traktionsabschnitt 42 ist bevorzugt aus einzelnen Segmenten 83a, die in Umfangsrichtung aufeinander folgen. Miteinander sind die einzelnen Segmente bevorzugt nur über die Befestigungsmittel 46 und/oder die Innen- bzw. Außenhalterung 8, 80 verbunden.

Zusammen mit wenigstens an der Außenhalterung in Umfangsrichtung verschieblichen Befestigungsmitteln 46 erleichtert ein solchermaßen segmentierter Traktionsabschnitt die Montage der Gleitschutzvorrichtung 1 auf einen Reifen 2, weil zwei Segemente aneinander geschoben und um die Reifenaufstandsfläche gelegt werden können.

Jeweils zwei Segmente können durch eine rautenförmige oder allgemein vieleckige Masche 83b voneinander getrennt sein, wobei sich die rautenförmige Masche quer zur Umfangsrichtung bevorzugt von der Innenhalterung zur Außenhalterung bzw. von einem an der Innenhalterung bevorzugt unmittelbar angebrachten Befestigungsmittel zu einem an der Außenhalterung bevorzugt unmittelbar angeordneten Befestigungsmittel erstreckt.

An der Innenhalterung können die Befestigungselemente gleichermaßen in Umfangsrichtung verschieblich oder auch unverschieblich angebracht sein.

Die Außenhalterung 80 weist bevorzugt einen ringförmigen, insbesondere ringscheibenförmigen, oder scheibenförmigen Haltekörper 84 auf, der insbesondere aus einem Kunststoff gefertigt sein kann. Der Haltekörper 84 ist ein Starrkörper, der sich unter den im Betrieb der Gleitschutzvorrichtung 1 vorkommenden Belastungen nicht verformt. Er dient gleichzeitig als Felgenschutz und liegt auf Höhe der Felgenschulter 86 (Fig. 1), die er bei montierter Gleitschutzvorrichtung abdeckt.

An der Außenhalterung 80 ist wenigstens eine selbsttätige, bevorzugt federkraftbetätigte Spannvorrichtung 88 zum Zusammenziehen der Innenhalterung 12 angebracht. Hierzu spannt die Spannvorrichtung 88 mittelbar oder unmittelbar das über die Laufläche 18 geführte Zugmittel 32 und holt dieses ein. Die Zugkraft 70, die von der Spannvorrichtung 88 erzeugt wird, kann aufgrund der starren Konstruktion der Außenhalterung 80 verformungsfrei aufgefangen werden.

Das Zugmittel 32 kann, wie in Fig. 3 gestrichelt dargestellt ist, entweder um die Außenhalterung 8 in Umfangsrichtung 24 zumindest abschnittsweise herumgeführt sein oder, beispielsweise mittels einer Umlenkrolle 89 am Einlauf auf die Außenhalterung 80 umgelenkt sein, wie in strichpunktierter Linie dargestellt ist.

Die Spannvorrichtung 88 kann einen Ratschenmechanismus 90 von der Bauart aufweisen, wie sie beispielsweise in der EP 1 301 361 A1 beschrieben ist. Bezüglich des Aufbaus und der Funktion des Ratschenmechanismus wird voll umfänglich auf diese Druckschrift Bezug genommen.

Anstelle eines solchen Ratschenmechanismus 90 kann die Außenhalterung 8 jedoch selbstverständlich auch einen anders ausgestalteten Ratschenmechanismus aufweisen. Beispielsweise kann eine in Umfangsrichtung 24 verlaufende Trommel (nicht gezeigt) an der koaxial zum Reifen verlaufenden Außenhalterung 80 drehbar gelagert sein und unter Federspannung das Zugmittel aufrollen.

In Fig. 3 ist noch zu erkennen, dass der Traktionsabschnitt 42 Spurstränge 91 aufweisen kann, die im montierten Zustand der Gleitschutzvorrichtung 1 auf der Lauffläche 18 aufliegen und in Umfangsrichtung 24 verlaufen. Die Spurstränge 91 können benachbarte, quer oder schräg zur Umfangsrichtung 24 verlaufende Traktionsstränge 44 miteinander verbinden.

An der Stelle 38, an der das Zugmittel 32 über die Lauffläche 18 geführt ist, schließt sich bevorzugt in Umfangsrichtung 24 an einer Seite kein Spurstrang 91 an. Diese Ausgestaltung erleichtert es, die Gleitschutzvorrichtung 1 auf den Reifen aufzuziehen, denn an dieser Stelle kann der Traktionsabschnitt 42 um die Reifenaufstandsfläche herum geführt werden.

Sobald die Spannvorrichtung 88 betätigt wird, wird die Zugkraft 70 erzeugt. Die Spannvorrichtung 88 holt das Zugmittel 32 mittelbar oder unmittelbar ein. Die Enden 28, 30 der Innenhalterung 8 werden aufeinander zu gezogen und die Gleitschutzvorrichtung 1 wird dadurch am Reifen gesichert. Aufgrund der selbsttätigen Spannvorrichtung 88 sichert sich die Gleitschutzvorrichtung 1 während der Fahrt des Kraftfahrzeugs automatisch.

Das Zugmittel 32 kann an wenigstens einer Stelle mit dem Traktionsabschnitt 42, vorzugsweise in etwa mittig zwischen der Innenhalterung und der Außenhalterung, verbunden sein. Die Verbindung zwischen dem Zugmittel 32 und dem Traktionsabschnitt 42 kann sich an einem Spurstrang 91, insbesondere einem Ende eines Spurstrangs 91, oder aber an einem Traktionsabschnitt 44 befinden. Fig. 3 zeigt lediglich zu Anschauungszweicken die Verbindung über einen Spurstrang 91. Ist das Zugmittel 32 innerhalb eines Kettenstranges 40 geführt, so kann der Kettenstrang in einen Traktionsstrang 44 oder einen Spurstrang 91 eingehängt sein. Auf diese Weise kann über das Zugmittel 32 gleichzeitig der Traktionsabschnitt 42 in Umfangsrichtung 24 gespannt werden. Dies wird durch die in Umfangsrichtung 24 bewegliche Anbindung des Traktionsabschnittes 42 an der Außenhalterung 80 unterstützt.

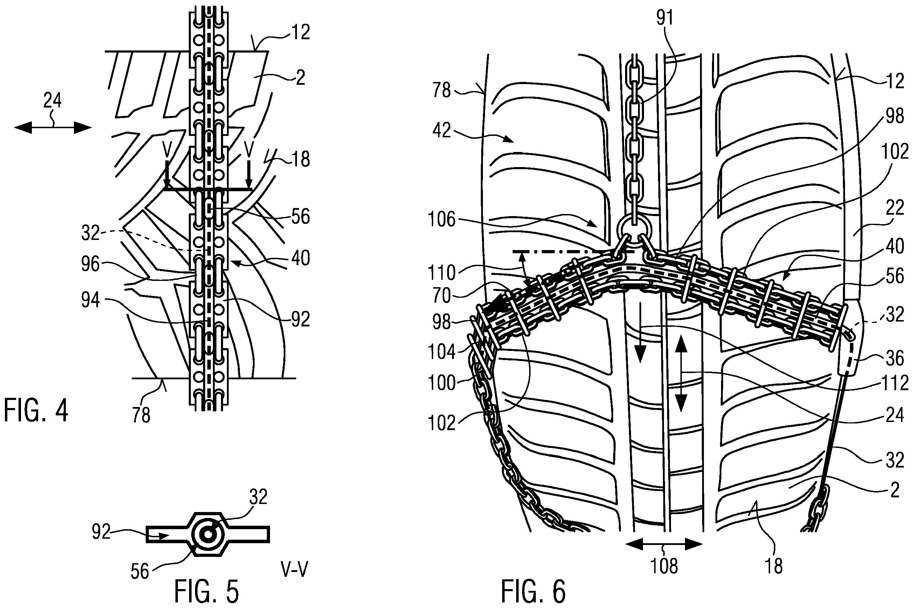

Fig. 4 zeigt ein Beispiel für einen Kettenstrang 40, in dem das Zugmittel 32 vor Beschädigungen geschützt von der Innenseite 12 des Reifens 2 zu dessen Außenseite 78 geführt ist.

Der Kettenstrang 40 weist plattenförmige Kettenglieder 92 auf, die mit einem rohrförmigen Durchlass 94 versehen sind, durch den das Zugmittel 32 geführt ist. In den Durchlass kann eine Hülse oder ein Schlauch 56 eingelegt sein, um Reibungsverluste und Verschleiß zu verringern.

Die Kettenglieder 92 mit dem Durchlass 94 können aus einem Blechmaterial oder einem Kunststoff gefertigt sein. Jedes plattenförmige Kettenglied 92 kann durch ein Paar von Rund- oder Profilstahlgliedern 96 mit dem darauffolgenden plattenförmigen Kettenglied 92 verbunden sein. Die beiden Profil- bzw. Rundstahlglieder 96 befinden sich zu beiden Seiten des Zugmittels 32, um es auch in dem Bereich zwischen den plattenförmigen Kettengliedern 92 zu schützen. Die plattenförmigen Kettenglieder 92 liegen bevorzugt flächig auf der Lauffläche 18 des Reifens auf. Ihre Länge und Breite sind größer als die Länge und Breite von Profilrillen der Lauffläche 18, so dass der Kettenstrang 40 nicht auf der Lauffläche 18 verhaken kann.

Fig. 5 zeigt einen Querschnitt entlang der Linie V-V der Fig. 4 durch ein plattenförmiges Kettenglied 92. Zu erkennen ist, dass das Zugmittel 32 im Durchlass 94 innerhalb eines Schlauches oder einer Hülse 56 geführt sein kann.

Eine weitere Ausgestaltung eines Kettenstrangs 40, der zusätzlich oder alternativ zum Kettenstrang 40 der Fig. 4 verwendet werden kann, ist in Fig. 6 gezeigt. Der Kettenstrang 40 dient wieder dem Schutz des Zugmittels 32, während es über die Lauffläche 18 des Reifens 2 geführt ist. Das Zugmittel 36 kann wieder in einer Hülse oder einem Schlauch 56 angeordnet sein.

Der Kettenstrang 40 ist bei der in Fig. 6 dargestellten Ausgestaltung aus zwei Teilsträngen 98, 40 aus Rund- oder Profilstahlgliedern aufgebaut. Die Teilstränge 98, 100 verlaufen parallel und beabstandet zueinander, wobei das Zugmittel 32, gegebenenfalls mit Schlauch oder Hülse 56, zwischen den beiden Teilsträngen 98, 100 angeordnet ist. Die liegenden, im Wesentlichen parallel zur Lauffläche 18 angeordneten Kettenglieder 102 sind miteinander durch Querglieder 104 verbunden, durch die das Zugmittel 32 hindurchgeführt ist. Die Querglieder 104 fixieren die beiden Teilstränge 98, 100 parallel zueinander.

Der Kettenstrang 40 kann Teil eines Spurkreuzes 106 sein, indem entweder ein Teilstrang 98, 100 des Traktionsabschnittes 42 in einen Spurstrang des Traktionsabschnittes 42 eingehängt ist oder indem wenigstens drei Kettenstränge aufeinander treffen.

Bei dem Ausführungsbeispiel der Fig. 6 ist ein Spurstrang 91 mit zwei Teilsträngen 98 verbunden, die sich in axialer Richtung 108 vom Spurkreuz 106 weg erstrecken. Wie ferner zu erkennen ist, verläuft der Kettenstrang 40 beidseits des Spurstranges 91 von dem Spurstrang 91 weg. Der Winkel 110 ist dabei bevorzugt ein spitzer Winkel 110 zur axialen Richtung 108. Gegenüber dem Spurkreuz 106 sind die Stellen, an denen der Kettenstrang 40 an der Innenseite 12 bzw. der Außenseite 78 des Reifens 2 endet, in Umfangsrichtung 24 zum Spurkreuz 106 versetzt. Dadurch ergibt sich, wie bereits erwähnt, bei einem Zug 70 auf das Zugmittel 32 eine den Traktionsabschnitt 42 über den Spurstrang 91 spannende Kraft 112.

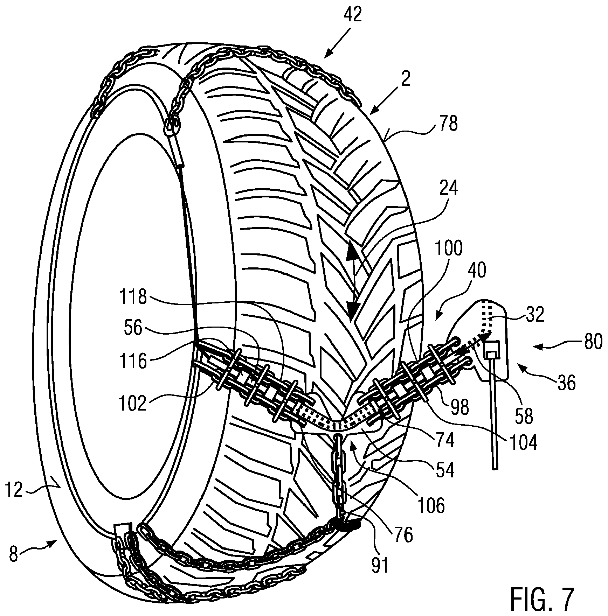

Fig. 7 zeigt ein weiteres Ausführungsbeispiel eines Kettenstranges 40, der ebenfalls aus zwei parallel zueinander verlaufenden Teilsträngen 98, 100 aufgebaut ist, zwischen denen das Zugmittel 32 verläuft.

Im Unterschied zu dem Kettenstrang 40 der Fig. 6 weist das Spurkreuz 106 ein Spurkreuzelement 114 aus einem Blech oder Kunststoff auf, in das zu den beiden Seiten 12, 78 des Reifens 2 hin, also quer zur Umfangsrichtung 24, jeweils ein Kettenstrang 40 eingehängt ist, der sich zu den Reifenflanken an der Innenseite 12 und der Außenseite 18 erstreckt. Ferner ist am Spurkreuzelement 114 ein Spurstrang 91 eingehängt.

Das Spurkreuzelement 114 weist, ähnlich wie die Zugmittelführung 36, eine insbesondere rohrförmige Führung 54 für das Zugmittel 32 auf. Die Führung 54 kann, wie Fig. 7 zeigt, V- oder bogenförmig ausgestaltet sein. Die Öffnungen bzw. Austritte 74, 76, an denen das Zugmittel 32 aus dem Spurkreuzelement 114 tritt, sind bevorzugt weg vom Spurstrang 91 gerichtet, um bei Zug auf das Zugmittel die den Traktionsabschnitt 42 in Umfangsrichtung 24 spannende Kraft 112 (Fig. 6) zu erzeugen. Der Spurstrang 91 ist bevorzugt an einer konvexen Seite der Führung 54 eingehängt.

Ein weiterer Unterschied des Kettenstranges 40 der Fig. 7 zu dem der Fig. 6 besteht darin, dass die Querglieder 104 nicht in die liegenden Glieder 102 der Teilstränge 98, 100 eingehängt sind, sondern diese vollständig umfassen. Die Teilstränge 98, 100 verlaufen folglich durch die Querglieder 104 hindurch.

In Fig. 7 sind ferner Hülsen 56 vorgesehen, die mit einer Verdickung 160 versehen sind. Die Hülsen 56 sind somit komplementär zum Zwischenraum zwischen den beiden Teilsträngen 98, 100 ausgestaltet und damit in Längsrichtung 58 des Zugmittels unverschieblich. Die Verdickungen 160 befinden sich jeweils zwischen den sich gegenüberliegenden stehenden Kettengliedern 118 der Teilstränge 98, 100. Zwischen den liegenden Kettengliedern 104 ist die Hülse 56 gegenüber dem verdickten Abschnitt 116 verjüngt.

Ferner ist in Fig. 7 noch gezeigt, dass auf der Außenseite 78 alternativ oder zusätzlich eine Zugmittelführung 36 vorhanden sein kann.

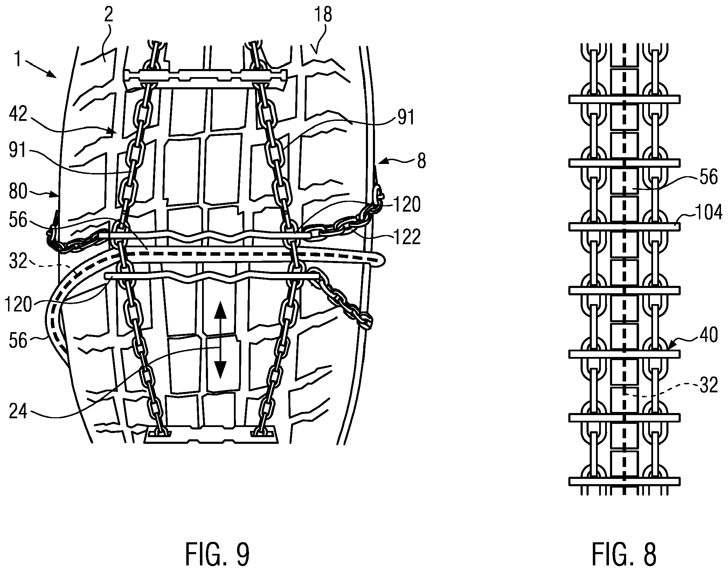

Fig. 8 zeigt eine weitere Variante eines Kettenstranges 40, mit dem das Zugmittel 32 über die Lauffläche 18 (in Fig. 8 nicht gezeigt) geführt werden kann. Im Unterschied zur Variante der Fig. 7 sind die Querglieder 104 keine Rund- oder Profilstahlglieder, sondern stegförmig und bevorzugt aus Blech gestanzt. Die Hülsen 56, die das Zugmittel 32 zumindest zwischen den Quergliedern 104 umgeben, sind als Distanzhülsen 56 ausgebildet, zu denen sich zwei aufeinanderfolgende Querglieder 104 abstützen.

Um das Zugmittel 32 von der Innenhalterung 8 zur Außenhalterung 80 zu führen, muss nicht notwendigerweise ein Kettenstrang 40 vorhanden sein. Das Zugmittel 32 kann beispielsweise gemäß Fig. 9 auch zwischen zwei Querstegen 120 des Traktionsabschnittes 42 verlaufen. Die Querstege 102 sind, ähnlich wie die Querglieder 104 der Fig. 8, hochkant stehende Stanzteile aus Blech, die bei montierter Gleitschutzvorrichtung 1 quer zur Umfangsrichtung 24 verlaufend auf der Lauffläche 18 des Reifens 2 aufliegen. Die Querstege 120 dienen als traktionserhöhende Bestandteile des Traktionsabschnittes 42. Sie können in zwei quer zur Umzugsrichtung beabstandet und parallel zueinander verlaufende Spurstränge 91 eingehängt sein, als deren Breithalter sie gleichzeitig dienen. Gegen ein Verschieben quer zur Umfangsrichtung 24 können sie durch eingehängte Leiterkettenabschnitte 122, die sich von den Querstegen 120 jeweils zur Innen- und Außenhalterung 8, 80 erstrecken, gesichert sein.

Das Zugmittel 32 kann durch stehende Kettenglieder der Spurstränge 91, die die beiden Querstege 120 halten, hindurchgeführt sein. Ein schlauch- oder hülsenförmiger Mantel 56 kann als Distanzhalter zwischen den beiden Spursträngen 91 und zum Schutz des Zugmittels 32 vorgesehen sein.

Natürlich ist ein Schutz des Zugmittels 32 auf der Lauffläche 18 auch mit lediglich einem einzigen Quersteg 120 möglich.

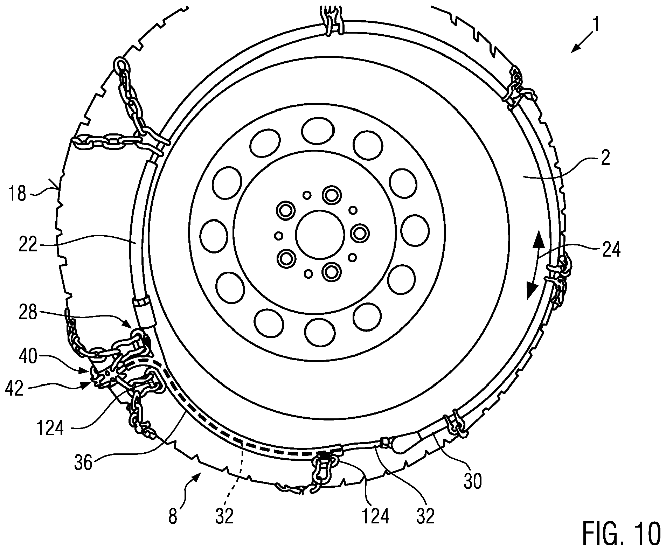

Fig. 10 zeigt eine Gleitschutzvorrichtung 1, in der die Innenhalterung 8 gegenüber der in Fig. 1 dargestellten Ausgestaltung etwas abgeändert ist. Die Zugmittelführung 36 ist bei dieser Ausgestaltung im Wesentlichen rohrförmig und aus einem Metall- oder Kunststoffrohr gefertigt. An der Zugmittelführung 36 sind kettenglied- oder ringförmige Befestigungsstellen 124 für den Traktionsabschnitt 42 angebracht. Ferner ist das eine Ende 28 des Bügels 22 an der rohrförmigen Zugmittelführung 36 befestigt.

Wie schon zuvor dient die Zugmittelführung dazu, das Zugmittel 32 von der Umfangsrichtung hin zur Lauffläche 18 des Reifens 2 umzulenken.

Fig. 11 zeigt eine Ausgestaltung der Innenhalterung 8, bei der das Zugmittel 32 nicht wie in Fig. 1 an einem Ende 28 des Bügels 22 befestigt und am anderen Ende verschieblich umgelenkt ist, sondern sich über die beiden Enden 28, 30 hinaus zur Außenhalterung 80 erstreckt. Eine Umlenkung des Zugmittels findet nunmehr an beiden Enden 28, 30 mittels jeweils einer Zugmittelführung 36 statt. Das Zugmittel 32 verläuft aber wieder direkt zwischen den beiden Enden 28, 20. Nach der Umlenkung in der Zugmittelführung 36 verläuft das Zugmittel 32 an beiden Enden 28, 20 zur Lauffläche 18, ist aber dabei weg von der Stelle 26, an der der Bügel 22 unterbrochen ist, gerichtet.

Das Zugmittel 32 wird bei einer solchen Ausgestaltung an zwei in Umfangsrichtung 24 voneinander beabstandeten Stellen 38 über die Lauffläche 18 des Reifens 2 geführt. Der Abstand der beiden Stellen 38 ist größer als der Abstand der beiden Enden 28, 30 der Innenhalterung 8.

Der Vorteil einer solchen symmetrischen Führung des Zugmittels 32 liegt darin, dass sich die Komponenten der Zugkraft 70 in Umfangsrichtung 24 aufheben. Dadurch bleibt keine Kraftkomponente mehr übrig, die die Innenhalterung 8 beim Zusammenziehen in Umfangsrichtung 24 dreht.

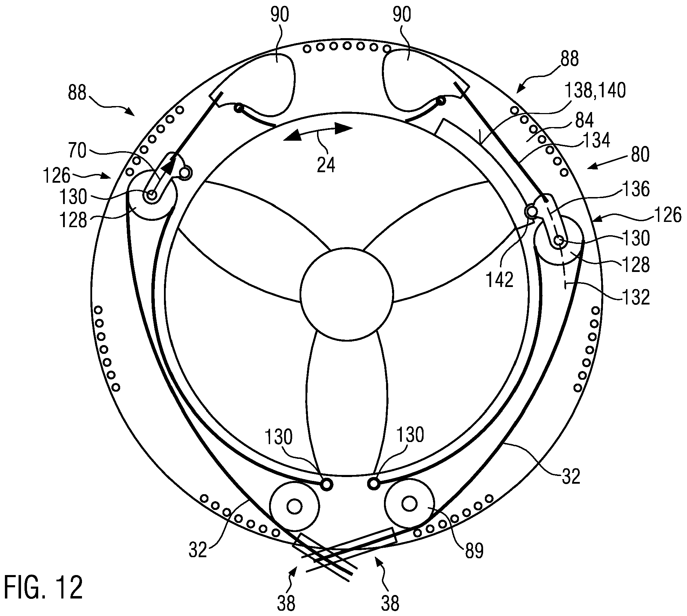

Fig. 12 zeigt eine Außenhalterung 80, wie sie mit der in Fig. 11 dargestellten Innenhalterung 8 verwendet werden kann.

Für jedes Ende 28, 30 des Bügels 22 ist bei dieser Ausgestaltung eine eigene Spannvorrichtung 88 vorgesehen. Jeder Spannvorrichtung 88 ist ein Ende 28, 30 zugeordnet, das entlang des Zugmittels 32 der entsprechenden Spannvorrichtung 88 am nächsten ist. Die Spannvorrichtungen 88 können insbesondere an dem ringscheiben- oder scheibenförmigen Haltekörper 84 befestigt sein, wie er bereits mit Bezug auf die Fig. 3 erläutert wurde.

Das Zugmittel 32 kann über zwei Einlaufrollen 89, die ebenfalls am Haltekörper 84 angebracht sind, umgelenkt sein und innerhalb des Schalters des Haltekörpers 84, also etwa in Umfangsrichtung 24 hin zu den Spannvorrichtungen 88 verlaufen. Der Haltekörper 84 und das Zugmittel 32 können von einem Gehäuse abgedeckt sein.

Die Spannvorrichtungen 88 sind in Umfangsrichtung 24 voneinander beabstandet, beispielsweise um etwa 91 bis 270°, vorzugsweise um die 120°. Die Spannvorrichtungen 88 befinden sich bevorzugt in der Hälfte des Rades 4, die den Stellen 38, an denen das Zugmittel 32 über die Lauffläche geführt wird, gegenüberliegt.

Die Spannvorrichtungen 88 sind in Umfangsrichtung 24 bevorzugt gegenläufig orientiert.

Jede Spannvorrichtung 88 ist bevorzugt mit einem Flaschenzug 126 versehen, der eine Flaschenzugrolle 128 aufweist, um die das Zugmittel 32 umgelenkt ist. Die beiden Enden des Zugmittels 32 sind an zwei Befestigungsstellen 130 am Haltekörper 34 befestigt. Die Befestigungsstellen 130 und die Spannvorrichtungen 88 befinden sich bevorzugt in unterschiedlichen Quadranten.

Anstelle einer Befestigung des Zugmittels 32 an der Außenhalterung 80 kann das Zugmittel 32 bei einer solchen Konstruktion auch endlos verlaufen, indem es von der einen zur anderen Flaschenzugrolle 128 verläuft.

Die Flaschenzugrolle 128 ist von der Außenhalterung 80 verschieblich gehalten. Eine Achse 130 der Flaschenzugrolle 128 ist entlang einer vorzugsweise in Umfangsrichtung 24 verlaufenden Bahn verschieblich.

Durch eine Verschiebung der Flaschenzugrollen 128 relativ zu der Außenhalterung 80 und den Stellen 38 wird die von der Außenhalterung 80 bzw. der Spannvorrichtung 88 aufgenommene Länge des Zugmittels 32 verändert. Je größer die von der Spannvorrichtung 88 eingeholte Länge des Zugmittels 32 ist, umso mehr nähern werden die Enden 28, 30 der Innenhalterung 8 (Fig. 11) zueinander. Durch die Verwendung von zwei Spannvorrichtungen 88 verdoppelt sich die eingeholte Länge.

Um die über den Flaschenzug 126 eingeholte Länge noch einmal zu vergrößern, ist die translatorisch bewegliche Flaschenzugrolle 128 mit ihrer Achse an einem Spannmittel 134, beispielsweise einem weiteren Seil, insbesondere Drahtseil, befestigt. Das Spannmittel 134 wird von dem Ratschenmechanismus 90 unter Federkraft eingeholt, so dass auf die Achse 130 der Flaschenzugrolle 128 eine Zugkraft 70 ausgeübt wird. Die Zugkraft 70 wird über die Flaschenzugrolle 128 an das Zugmittel 32 und von diesem an die Enden 28, 30 weitergegeben.

Die Führungsrolle 128 kann an einem Schlitten 136 befestigt sein, der entlang einer von der Außenhalterung 80 gebildeten Führung 138 verschieblich ist. Die Führung 138 kann von einer im Wesentlichen in Umfangsrichtung 24 verlaufenden Führungswand 140 gebildet sein. Alternativ kann auch die Flaschenzugrolle 128 ohne Schlitten entlang einer solchen Führung verschieblich sein.

Der Schlitten 136 kann mit einer Führungsrolle 142 versehen sein, die an der Führung 138 abrollt.

Um die Umlenkrollen 89 sowie den Flaschenzug 126 vor Verschmutzung zu schützen, kann ein Gehäuse vorgesehen sein.

Ein Flaschenzug kann auch vorgesehen sein, wenn nur eine einzige Spannvorrichtung verwendet wird. Alternativ können auch zwei von den Enden 28, 30 kommende Abschnitte des Zugmittels um zwei Flaschenzugrollen eines einzigen Flaschenzugs geführt sein.

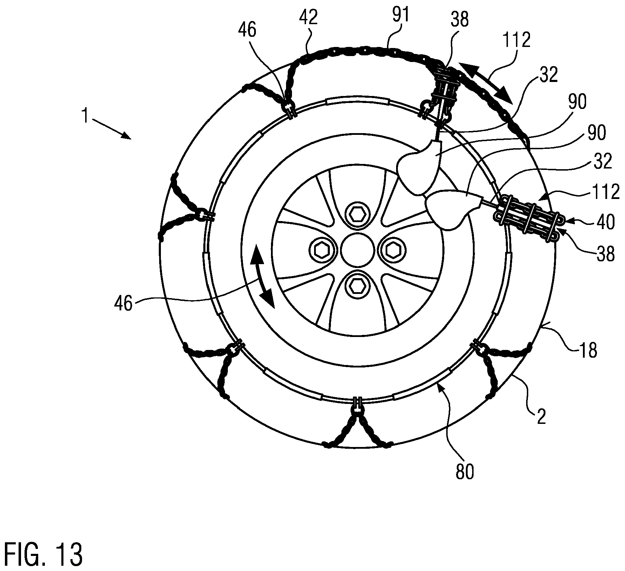

Fig. 13 zeigt die Außenhalterung 80 der Fig. 12 im montierten Zustand der Gleitschutzvorrichtung 1. Wie zu erkennen ist, werden an den beiden Stellen 38, an denen das Zugmittel 32 über die Lauffläche 18 des Reifens 2 geführt ist, Kettenstränge 40 der oben bereits beschriebenen Art verwendet. Auch Querstege 120 können verwendet werden.

Wie Fig. 13 ferner zeigt, wird durch die Verwendung zweier Spannvorrichtungen der Traktionsabschnitt 42 gleichmäßiger zusammengezogen, weil die den Traktionsabschnitt 42 spannende Kraft 112 an zwei Stellen 38 in den Traktionsabschnitt 42 eingeleitet und dort über die Spurstränge 91 und die in Umfangsrichtung 46 beweglich an der Außenhalterung 80 gehalterten Befestigungsmittel 46 verteilt.

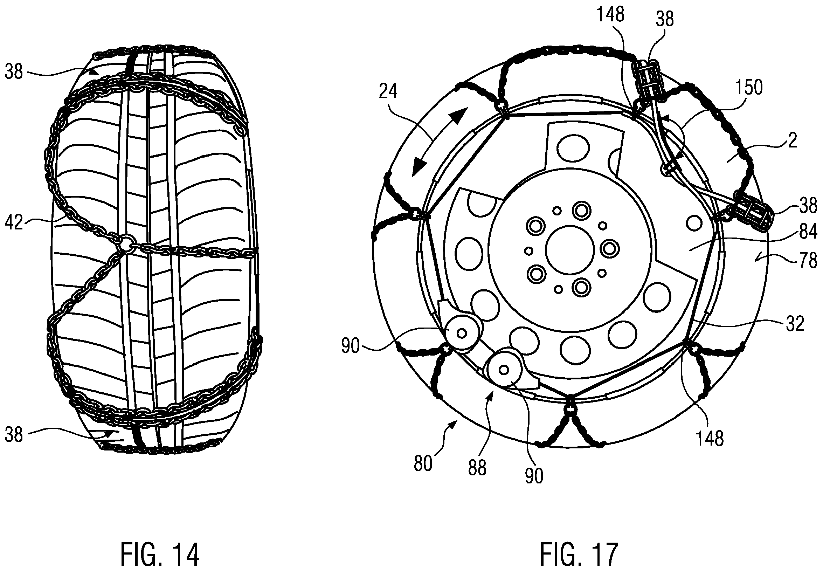

Die beiden Kettenstränge 40 können zwei sich gegenüberliegende Spurkreuze 106 bilden. Liegen allerdings die Stellen 38 in Umfangsrichtung 24 so weit auseinander, dass nicht mehr gewährleistet ist, dass der Traktionsabschnitt in jedem Moment des Überrollens der Lauffläche sich auf der Reifenaufstandsfläche befindet, kann zwischen den beiden Stellen 38 ein weiterer Teil des Traktionsabschnittes 42 liegen, wie dies in Fig. 14 dargestellt ist.

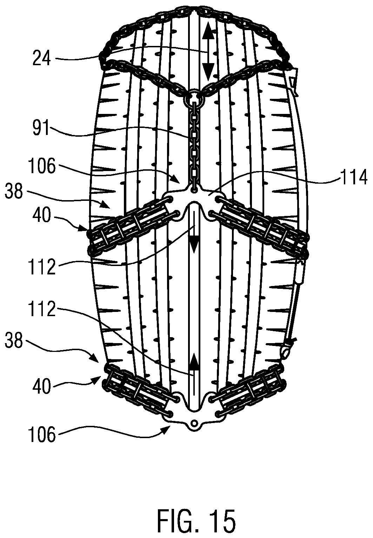

Für jede der beiden Stellen 38 kann eine der obigen Ausgestaltungen verwendet werden, mit der das Zugmittel 32 über die Lauffläche 18 geführt wird. Beispielsweise können nach Fig. 15 für beide Abschnitte des Zugmittels Spurkreuzelemente 114 verwendet werden.

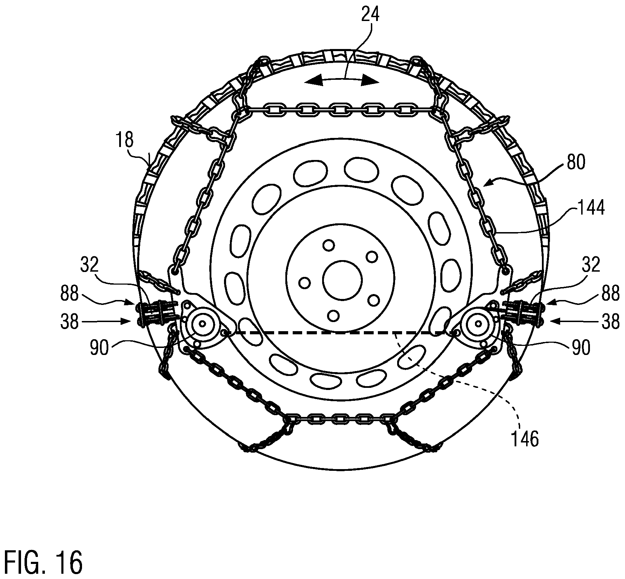

Die Außenhalterung 80 muss nicht notwendigerweise einen starren Haltekörper 84 aufweisen. Wie Fig. 16 zeigt, kann die Außenhalterung 80 einen an der äußeren Reifenflanke entlang der Umfangsrichtung 24 verlaufenden biegeschlaffen Seitenspannstrang 144 aufweisen, in den eine oder zwei Spannvorrichtungen 88, beispielsweise der Ratschenmechanismus 90, eingehängt sind. Die Spannvorrichtungen 88 bzw. der Ratschenmechanismus 90 können sich dabei in Umfangsrichtung 24 an den Stellen 38 befinden, an denen das Zugmittel 32 über die Lauffläche 18 geführt ist, oder die Stelle 38 und der Ratschenmechanismus 90 befinden sich jeweils in unterschiedlichen Quadranten.

Eine solche Ausgestaltung setzt einen gut gespannten Seitenstrang 144 voraus, damit die Spannvorrichtungen 88 möglichst unbeweglich gehalten werden und nicht der Zugkraft 70 durch Ausgleichsbewegungen folgen können. Liegen die Spannvorrichtungen 88 sich in Umfangsrichtung 24 etwa gegenüber, so kann zwischen ihnen ein Haltemittel 146 verlaufen, um radiusparallele Bewegungen zu verhindern.

Fig. 17 zeigt eine Abwandlung der Außenhalterung 80 der Fig. 12 im montierten Zustand. Die Außenhalterung 80 der Fig. 17 weist keinen Flaschenzug auf. Das Zugmittel 32 ist unmittelbar in die Spannvorrichtungen 80 bzw. den Ratschenmechanismus 90 geführt. Alternativ kann das Zugmittel 32 auch direkt mit einem Spannmittel 134 verbunden sein, beispielsweise über eine Seilkupplung. An der Außenhalterung 80 ist das Zugmittel 32 an in Umfangsrichtung 24 voneinander beabstandeten Führungsstellen geführt. Statt einer solchen punktweisen Führung kann das Zugmittel 32 auch kontinuierlich, beispielsweise in einem Kanal oder einem Rohr, oder entlang einer Wand der Außenhalterung 80 in Umfangsrichtung 24 von den Stellen 28 zu den Spannvorrichtungen 88 geführt sein. Um einen möglichst stumpfen Umlenkungswinkel 150 des Zugmittels 32 auch bei der Außenhalterung zu erreichen, kann sich das Zugmittel 32 im Bereich der Außenhalterung 80 auch überkreuzen.

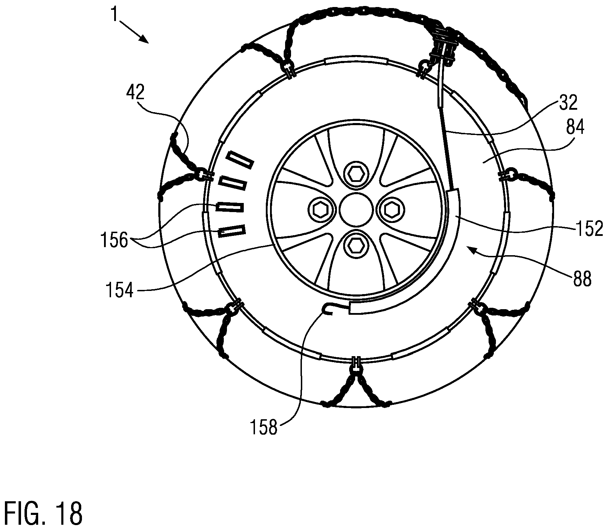

Fig. 18 zeigt eine Variante einer Spannvorrichtung 88, die ohne Ratschenmechanismus 90 auskommt. Die Spannvorrichtung 88 weist stattdessen ein Federelement 152 auf, an dessen einem Ende das Zugmittel 32 befestigt ist und dessen anderes Ende am Haltekörper 84 befestigt ist. Um das Zugmittel 32 bzw. das Federelement 152 koaxial zum Haltekörper 84 zu führen, kann das Zugelement 32 und/oder das Federelement 152 um eine Führungswand 154 gelegt sein.

Mit Hilfe einer Mehrzahl von Befestigungsstellen 156 für das Federelement 152 kann die auf das Zugmittel 32 wirkende Kraft variiert werden.

Zum Aufziehen der Gleitschutzvorrichtung 1 wird zunächst das Federelement 152 kraftfrei gestellt, beispielsweise indem es von den Befestigungsstellen 156 gelöst wird. Zum Spannen der Innenhalterung und bevorzugt auch des Traktionsabschnitts 42 wird nach Auflegen der Gleitschutzvorrichtung 1 das eine Ende des Federelements 152 beispielsweise durch Einhängen in eine Befestigungsstelle 156 mittels eines Hakens 158 oder eines anderen Haltemittels gegenüber dem Haltekörper 84 fixiert.

Selbstverständlich kann das Federelement 152 auch mit einer Befestigungsstelle 156 verbunden bleiben, wenn ein Betätigungselement, wie beispielsweise ein Knebelverschluss vorgesehen ist, der das Federelement 152 nach Aufziehen oder vor Abziehen der Gleitschutzvorrichtung 1 kraftfrei stellt.

Das Federelement 152 kann ein Gummielement, eine Triebfeder und/oder eine Spiralfeder aufweisen.

Die in Fig. 18 dargestellte Variante funktioniert auch mit zwei Abschnitten des Zugelements 52, die entsprechend sich im Bereich des Haltekörpers überkreuzen und dann von zwei Federelementen 152 unabhängig voneinander gespannt werden.

### Bezugszeichen

- 1: Gleitschutzvorrichtung
- 2: Reifen
- 4: Rad
- 6: Felge
- 8: Innenhalterung
- 10: Reifenflanke
- 12: Innenseite von Rad bzw. Reifen
- 14: radiale Richtung
- 18: Lauffläche des Reifens
- 20: zusammengezogener Zustand der Innenhalterung
- 22: Bügel der Innenhalterung
- 24: Umfangsrichtung
- 26: unterbrochene Stelle des Bügels
- 28: ein Ende des Bügels
- 30: anderes Ende des Bügels
- 32: Zugmittel zum Zusammenziehen des Bügels
- 34: Einholen des Zugmittels
- 36: Zugmittelführung
- 38: Stelle, an der Zugmittel über die Lauffläche geführt ist
- 40: Kettenstrang zum Schutz des Zugmittels
- 42: Traktionsabschnitt
- 44: Traktionsstrang
- 46: Befestigungsmittel
- 48: Abstandshalter
- 50: Ende des Abstandshalters
- 52: Halbschale
- 54: Führung für das Zugmittel
- 56: Hülse oder Schlauch
- 58: Längsrichtung des Zugmittels
- 60: Umlenkungswinkel des Zugmittels an der Innenhalterung
- 62: Halteabschnitt
- 64: Aufnahme der Zugmittelführung
- 66: Presshülse
- 68: rohrförmige Aufnahme der Zugmittelführung für Zugmittel
- 70: Zugkraft
- 72: Öffnung der rohrförmigen Aufnahme
- 74: Öffnung der Aufnahme für den Bügel
- 76: Austritt der rohrförmigen Aufnahme zur Lauffläche
- 78: Außenseite des Reifens
- 80: Außenhalterung
- 82: Befestigungsstellen von Außenhalterung und Traktionsabschnitt
- 83a: Segment des Traktionsabschnittes
- 83b: rautenförmige Masche
- 84: Haltekörper
- 86: Felgenschulter
- 88: Spannvorrichtung
- 89: Einlaufrolle der Außenhalterung
- 90: Ratschenmechanismus
- 91: Spurstrang des Traktionsabschnittes
- 92: (plattenförmiges) Kettenglied des Kettenstranges
- 94: rohrförmiger Durchlass des plattenförmigen Kettengliedes
- 96: Rund- oder Profilstahlglied des Kettenstranges
- 98: Teilstrang des Kettenstranges
- 100: Teilstrang des Kettenstranges
- 102: liegendes Kettenglied eines Teilstranges
- 104: Querglied des Kettenstranges
- 106: Spurkreuz des Traktionsabschnittes
- 108: axiale Richtung
- 110: Winkel der Umlenkung des Zugmittels auf der Lauffläche
- 112: den Traktionsabschnitt spannende Zugkraft
- 114: Spurkreuzelement mit Führung für das Zugmittel
- 116: Verdickung einer Hülse oder eines Schlauches für das Zugmittel
- 118: stehendes Kettenglied eines Teilstranges
- 120: Quersteg des Traktionsabschnittes
- 122: Leiterkettenabschnitt des Traktionsabschnittes
- 124: Befestigungsstelle für Traktionsabschnitt
- 126: Flaschenzugsystem der Spannvorrichtung
- 128: Flaschenzugrolle
- 130: Achse der Flaschenzugrolle
- 132: Bahn der Achse der Flaschenzugrolle
- 134: Spannmittel der Spannvorrichtung
- 136: die Flaschenzugrolle tragender, Außenhalterung verschieblicher Schlitten
- 138: Führung für den Schlitten
- 140: von der Führung gebildete Führungswand
- 142: Führungsrolle
- 144: Seitenspannstrang
- 146: Haltemittel
- 148: Führungsstelle für das Spannmittel an der Außenhalterung
- 150: Umlenkungswinkel des Zugmittels beim Auflaufen auf die Außenhalterung
- 152: Federelement
- 154: Führungswand
- 156: Befestigungsstellen
- 158: Haken

## Patentansprüche

1. Gleitschutzvorrichtung (1) für den Reifen (2) eines Kraftfahrzeugs, mit einer zusammenziehbar ausgestalteten Innenhalterung (8), die bei montierter Gleitschutzvorrichtung zu der dem Kraftfahrzeug zugewandten Innenseite (12) des Reifens (2) angeordnet ist, mit einer Außenhalterung (80), die bei montierter Gleitschutzvorrichtung an der vom Kraftfahrzeug weg weisenden Außenseite (78) des Reifens (2) angeordnet ist, mit einem Traktionsabschnitt (42), der an der Innenhalterung (8) und der Außenhalterung (80) angebracht ist und bei montierter Gleitschutzvorrichtung auf einer Lauffläche (18) des Reifens (2) aufliegt, und mit einem Zugmittel (32) zum Zusammenziehen der Innenhalterung (8), das sich bei montierter Gleitschutzvorrichtung von der Innenhalterung (8) über die Lauffläche (18) zur Außenhalterung (80) erstreckt, wobei die Außenhalterung (80) einen ring- oder scheibenförmigen Haltekörper (84) aufweist, der wenigstens eine selbsttätige Spannvorrichtung (88) für das Zugmittel (32) trägt und wobei die Innenhalterung (8) wenigstens eine Zugmittelführung (36) aufweist, von der das Zugmittel (32) umgelenkt ist, **dadurch gekennzeichnet, dass** die Zugmittelführung (36) an mindestens einem Ende (28, 30) eines zusammenziehbaren Bügels (22) der Innenhalterung (8) angeordnet ist.

2. Gleitschutzvorrichtung (1) nach Anspruch 1, **dadurch gekennzeichnet, dass** die Spannvorrichtung (88) einen Flaschenzug (126) aufweist.

3. Gleitschutzvorrichtung (1) nach Anspruch 2, **dadurch gekennzeichnet, dass** das Zugmittel (32) um eine Flaschenzugrolle (128) des Flaschenzuges (126) geführt ist und eine Achse (130) der Flaschenzugrolle (128) von der Spannvorrichtung (88) mit der Zugkraft (70) beaufschlagbar ist.

4. Gleitschutzvorrichtung (1) nach Anspruch 3, **dadurch gekennzeichnet, dass** die Flaschenzugrolle (128) entlang der Außenhalterung (80) verschieblich geführt ist.

5. Gleitschutzvorrichtung (1) nach Anspruch 3 oder 4, **dadurch gekennzeichnet, dass** die Flaschenzugrolle (128) auf einem Schlitten (136) befestigt ist.

6. Gleitschutzvorrichtung (1) nach einem der Ansprüche 1 bis 5, **dadurch gekennzeichnet, dass** das Zugmittel (32) im Bereich zwischen der Innenhalterung (8) und der Außenhalterung (80) zumindest abschnittsweise innerhalb eines Kettenstranges (40) verläuft.

7. Gleitschutzvorrichtung (1) nach Anspruch 6, **dadurch gekennzeichnet, dass** der Kettenstrang (40) bei montierter Gleitschutzvorrichtung (1) sich wenigstens abschnittsweise schräg zur Umfangsrichtung (24) des Reifens (2) von der Innen- zur Außenhalterung (8, 80) erstreckt.

8. Gleitschutzvorrichtung (1) nach Anspruch 6 oder 7, **dadurch gekennzeichnet, dass** mit dem Kettenstrang (40) wenigstens ein in Umfangsrichtung (24) des Reifens (2) verlaufender Spurstrang (90) des Traktionsabschnittes (42) verbunden ist.

9. Gleitschutzvorrichtung (1) nach einem der Ansprüche 1 bis 8, **dadurch gekennzeichnet, dass** das Zugmittel (32) an zwei in Umfangsrichtung (24) des Reifens (2) voneinander beabstandeten Stellen (28) sich von der Innenhalterung (8) zur Außenhalterung (80) erstreckt.

10. Gleitschutzvorrichtung (1) nach Anspruch 9, **dadurch gekennzeichnet, dass** die beiden Stellen (28) in Umfangsrichtung (24) des Reifens (2) weiter voneinander beabstandet sind als zwei Enden (28, 30) eines Bügels (22) der Innenhalterung (8)

11. Gleitschutzvorrichtung (1) nach einem der Ansprüche 1 bis 10, **dadurch gekennzeichnet, dass** wenigstens zwei Spannvorrichtungen (88) an der Außenhalterung (80) befestigt sind, wobei jede der zwei Spannvorrichtungen (88) über das Zugmittel (32) mit einem anderen Ende(28, 30) eines Bügels (22) der Innenhalterung (8) nächstliegend verbunden ist.

12. Gleitschutzvorrichtung (1) nach einem der Ansprüche 1 bis 11, **dadurch gekennzeichnet, dass** das Zugmittel (32) im Bereich zwischen der Innenhalterung (8) und der Außenhalterung (80) umgelenkt ist.

13. Gleitschutzvorrichtung (1) nach einem der Ansprüche 1 bis 12, **dadurch gekennzeichnet, dass** eine von der wenigstens einen Spannvorrichtung (88) erzeugte Zugkraft (70) eine in Umfangsrichtung (24) des Reifens (2) auf den Traktionsabschnitt (42) wirkende Zugkraft (112) erzeugt.

## Claims

1. Anti-skid device (1) for the tyre (2) of a motor vehicle, comprising a contractible inner support (8) which, when the anti-skid device is assembled, is arranged on the inner face (12) of the tyre (2) that faces the motor vehicle, comprising an outer support (80) which, when the anti-skid device is assembled, is arranged on the outer face (78) of the tyre (2) that faces away from the motor vehicle, comprising a traction portion (42), which is attached to the inner support (8) and the outer support (80) and rests on a tread (18) of the tyre (2) when the anti-skid device is assembled, and comprising pulling means (32) for contracting the inner support (8), which pulling means extends from the inner support (8), over the tread (18), to the outer support (80) when the anti-skid device is mounted, the outer support (80) having an annular or disc-shaped support body (84) which carries at least one automatic tensioning device (88) for the pulling means (32) and the inner support (8) having at least one pulling means guide (36), by which the pulling means (32) is deflected, **characterised in that** the pulling means guide (36) is arranged on at least one end (28, 30) of a contractible frame (22) of the inner support (8).

2. Anti-skid device (1) according to claim 1, **characterised in that** the tensioning device (88) comprises a pulley block (126).

3. Anti-skid device (1) according to claim 2, **characterised in that** the pulling means (32) is guided around a pulley-block roller (128) of the pulley block (126) and the pulling force (70) can be applied to an axle (130) of the pulley-block roller (128) by the tensioning device (88).

4. Anti-skid device (1) according to claim 3, **characterised in that** the pulley-block roller (128) is displaceably guided along the outer support (80).

5. Anti-skid device (1) according to either claim 3 or claim 4, **characterised in that** the pulley-block roller (128) is fastened to a carriage (136).

6. Anti-skid device (1) according to any of claims 1 to 5, **characterised in that** the pulling means (32) in the region between the inner support (8) and the outer support (80) extends at least in portions within a chain strand (40).

7. Anti-skid device (1) according to claim 6, **characterised in that**, when the anti-skid device (1) is assembled, the chain strand (40) extends, at least in portions, from the inner to the outer support (8, 80), so as to be oblique with respect to the circumferential direction (24) of the tyre (2).

8. Anti-skid device (1) according to either claim 6 or claim 7, **characterised in that** at least one track strand (90) of the traction portion (42), extending in the circumferential direction (24) of the tyre (2), is connected to the chain strand (40).

9. Anti-skid device (1) according to any of claims 1 to 8, **characterised in that** the pulling means (32) extends from the inner support (8) to the outer support (80) at two points (28) which are spaced apart in the circumferential direction (24) of the tyre (2).

10. Anti-skid device (1) according to claim 9, **characterised in that** the two points (28) are spaced further apart in the circumferential direction (24) of the tyre (2) than two ends (28, 30) of a frame (22) of the inner support (8).

11. Anti-skid device (1) according to any of claims 1 to 10, **characterised in that** at least two tensioning devices (88) are fastened to the outer support (80), each of the two tensioning devices (88) being connected via the pulling means (32) to a different end (28, 30) of a frame (22) of the inner support (8) so as to be adjacent thereto.

12. Anti-skid device (1) according to any of claims 1 to 11, **characterised in that** the pulling means (32) is deflected in the region between the inner support (8) and the outer support (80).

13. Anti-skid device (1) according to any of claims 1 to 12, **characterised in that** a tensile force (70), generated by the at least one tensioning device (88), generates a tensile force (112) that acts on the traction portion (42) in the circumferential direction (24) of the tyre (2).

## Revendications

1. Dispositif antidérapant (1) pour le pneumatique (2) d'un véhicule automobile, comprenant un système de maintien intérieur (8) pouvant être resserré, qui, lorsque le dispositif antidérapant est monté, est agencé sur le côté intérieur (12) du pneumatique (2) dirigé vers le véhicule automobile, un système de maintien extérieur (80), qui, lorsque le dispositif antidérapant est monté, est agencé sur le côté extérieur (78) du pneumatique (2) dirigé vers l'extérieur du véhicule automobile, le dispositif comprenant également un tronçon de traction (42), qui est placé sur le système de maintien intérieur (8) et le système de maintien extérieur (80), et s'appuie sur une surface de roulement (18) du pneumatique (2) lorsque le dispositif antidérapant est monté, et un moyen de traction (32) pour serrer le système de maintien intérieur (8) et qui, lorsque le dispositif antidérapant est monté, s'étend du système de maintien intérieur (8), par-dessus la surface de roulement (18), jusqu'au système de maintien extérieur (80), le système de maintien extérieur (80) présentant un corps de maintien (84) en forme d'anneau ou de disque, qui porte au moins un dispositif de serrage (88) automatique pour le moyen de traction (32), et le système de maintien intérieur (8) présentant au moins un guide de moyen de traction (36), par lequel est dévié le moyen de traction (32), **caractérisé en ce que** le guide de moyen de traction (36) est agencé à au moins une extrémité (28, 30) d'un arceau (22) pouvant être resserré, du système de maintien intérieur (8).

2. Dispositif antidérapant (1) selon la revendication 1, **caractérisé en ce que** le dispositif de serrage (88) comprend un système de mouflage (126).

3. Dispositif antidérapant (1) selon la revendication 2, **caractérisé en ce que** le moyen de traction (32) est guidé autour d'une poulie de mouflage (128) du système de mouflage (126), et un axe (130) de la poulie de mouflage (128) peut être sollicité par le dispositif de serrage (88), avec la force de traction (70).

4. Dispositif antidérapant (1) selon la revendication 3, **caractérisé en ce que** la poulie de mouflage (128) est guidée en coulissement le long du système de maintien extérieur (80).

5. Dispositif antidérapant (1) selon la revendication 3 ou la revendication 4, **caractérisé en ce que** la poulie de mouflage (128) est fixée sur un chariot (136).

6. Dispositif antidérapant (1) selon l'une des revendications 1 à 5, **caractérisé en ce que** le moyen de traction (32) s'étend, dans la zone entre le système de maintien intérieur (8) et le système de maintien extérieur (80), au moins par secteurs, à l'intérieur d'un brin de chaine (40).

7. Dispositif antidérapant (1) selon la revendication 6, **caractérisé en ce que** lorsque le dispositif antidérapant (1) est monté, le brin de chaine (40) s'étend au moins par secteurs, de manière oblique par rapport à la direction périphérique (24) du pneumatique (2), du système de maintien intérieur au système de maintien extérieur (8, 80).

8. Dispositif antidérapant (1) selon la revendication 6 ou la revendication 7, **caractérisé en ce qu'**au brin de chaine (40) est relié au moins un brin de trace (91) du tronçon de traction (42), qui s'étend dans la direction périphérique (24) du pneumatique (2).

9. Dispositif antidérapant (1) selon l'une des revendications 1 à 8, **caractérisé en ce que** le moyen de traction (32) s'étend, au niveau de deux endroits (28) espacés l'un de l'autre dans la direction périphérique (24) du pneumatique (2), du système de maintien intérieur (8) au système de maintien extérieur (80).

10. Dispositif antidérapant (1) selon la revendication 9, **caractérisé en ce que** lesdits deux endroits (28) sont espacés l'un de l'autre dans la direction périphérique (24) du pneumatique (2) d'une distance plus grande que deux extrémités (28, 30) d'un arceau (22) du système de maintien intérieur (8).

11. Dispositif antidérapant (1) selon l'une des revendications 1 à 10, **caractérisé en ce qu'**au moins deux dispositifs de serrage (88) sont fixés au système de maintien extérieur (80), chacun des deux dispositifs de serrage (88) étant relié, par l'intermédiaire du moyen de traction (32), au plus près à une autre extrémité (28, 30) d'un arceau (22) du système de maintien intérieur (8).

12. Dispositif antidérapant (1) selon l'une des revendications 1 à 11, **caractérisé en ce que** le moyen de traction (32) est dévié dans la zone entre le système de maintien intérieur (8) et le système de maintien extérieur (80).

13. Dispositif antidérapant (1) selon l'une des revendications 1 à 12, **caractérisé en ce qu'**une force de traction (7) produite par ledit au moins un dispositif de serrage (88), engendre une force de traction (112) agissant sur le tronçon de traction (42) dans la direction périphérique (24) du pneumatique (2).
